# EUROPEAN PATENT APPLICATION

(11) **EP 4 020 951 A2**
(43) Date of publication of application: **29.06.2022**
(21) Application number: 22173454.4
(22) Date of filing: 16.05.2022
(51) Int. Cl.: H04M 1/27, H04M 1/2748, G06F 16/332, G10L 15/26, G06F 40/53

(54) **CONTACT NAME SEARCHING USING VOICE**

(30) Priority: 27.05.2021 CN 202110586407
(71) Applicant: Apollo Intelligent Connectivity (Beijing) Technology Co., Ltd., Beijing 100176 (CN)
(72) Inventor: LIU, Rong, Beijing, 100176 (CN); LI, Jiantao, Beijing, 100176 (CN); HE, Xueyan, Beijing, 100176 (CN)
(74) Representative: V.O.

(57) **Abstract**

The present disclosure provides a method and apparatus for searching a voice, relates to the technical fields of Internet of Vehicles, smart cabins, voice recognition, etc. An implementation plan is: acquiring voice data; recognizing the voice data to obtain corresponding text data; obtaining a mixed-matching data set based on the text data and a preset to-be-matched data set; and filtering the mixed-matching data set based on the to-be-matched data set, to obtain a search result set corresponding to the voice data. This embodiment improves the comprehensiveness of voice search.

## Description

### TECHNICAL FIELD

The present disclosure relates to the technical field of data processing, in particular to the technical fields of Internet of Vehicles, smart cabins, voice recognition, etc., and more particular to a method and apparatus for searching a voice, an electronic device, a computer readable medium, and a computer program product.

### BACKGROUND

In a terminal calling scenario, if a user's pronunciation has defects (such as no distinction between l/r, or between front and back nasal sounds), after contact search is performed on a voice and a contact search result is obtained, if sorting is only performed according to the pinyin order of the names, it may easily cause confusion in a sorting result of the search result.

### SUMMARY

A method and apparatus for searching a voice, an electronic device, a computer readable medium, and a computer program product are provided.

In a first aspect, embodiments of the present disclosure provide a method for searching a voice, comprising: acquiring voice data; recognizing the voice data to obtain corresponding text data; obtaining a mixed-matching data set based on the text data and a preset to-be-matched data set; and filtering the mixed-matching data set based on the to-be-matched data set, to obtain a search result set corresponding to the voice data.

In a second aspect, embodiments of the present disclosure provide an apparatus for searching a voice, comprising: an acquisition unit, configured to acquire voice data; a recognition unit, configured to recognize the voice data to obtain corresponding text data; a matching unit, configured to obtain a mixed-matching data set based on the text data and a preset to-be-matched data set; and a processing unit, configured to filter the mixed-matching data set based on the to-be-matched data set, to obtain a search result set corresponding to the voice data.

In a third aspect, embodiments of the present disclosure provide an electronic device, comprising: one or more processors; and a memory, storing one or more programs, wherein the one or more programs, when executed by the one or more processors, cause the one or more processors to implement the method for searching a voice provided by the first aspect.

In a forth aspect, embodiments of the present disclosure provide a computer-readable medium, storing a computer program thereon, wherein the program, when executed by a processor, causes the processor to implement the method for searching a voice provided by the first aspect.

In a fifth aspect, an embodiment of the present disclosure provides a computer program product, comprising a computer program, wherein the computer program, when executed by a processor, implements the method for searching a voice provided by the first aspect.

The method and apparatus for searching a voice provided by the embodiments of the present disclosure, first acquiring voice data; then recognizing the voice data to obtain corresponding text data; next obtaining a mixed-matching data set based on the text data and a preset to-be-matched data set; and finally filtering the mixed-matching data set based on the to-be-matched data set, to obtain a search result set corresponding to the voice data. Therefore, based on the text data and the preset to-be-matched data set, the mixed-matching data set is obtained, which comprehensively expands the mixed-matching data that matches the text data, and further more reasonably filters the mixed-matching data that is compatible with the to-be-matched data set, so that the voice data search result is more accurate, and the user's voice search experience is improved.

It should be understood that the content described in this section is not intended to identify key or important features of the embodiments of the present disclosure, nor to limit the scope of the present disclosure. Other features of the present disclosure will be easily understood through the following description.

### BRIEF DESCRIPTION OF THE DRAWINGS

The accompanying drawings are used to better understand the present solution, and do not constitute a limitation to the present disclosure, in which:
Fig. 1 is a flowchart of an embodiment of a method for searching a voice according to the present disclosure;
Fig. 2 is a flowchart of a method for obtaining a mixed-matching data set according to the present disclosure;
Fig. 3 is a flowchart of a method for obtaining a search result set corresponding to voice data according to the present disclosure;
Fig. 4 is a flowchart of a method for obtaining a search data set according to the present disclosure;
Fig. 5 is a schematic structural diagram of an embodiment of an apparatus for searching a voice according to the present disclosure; and
Fig. 6 is a block diagram of an electronic device used to implement the method for searching a voice according to an embodiment of the present disclosure.

### DETAILED DESCRIPTION OF EMBODIMENTS

The following describes exemplary embodiments of the present disclosure in conjunction with the accompanying drawings, which includes various details of the embodiments of the present disclosure to facilitate understanding, and they should be considered as merely exemplary. Therefore, those of ordinary skill in the art should recognize that various changes and modifications can be made to the embodiments described herein without departing from the scope and spirit of the present disclosure. Also, for clarity and conciseness, descriptions of well-known functions and structures are omitted in the following description.

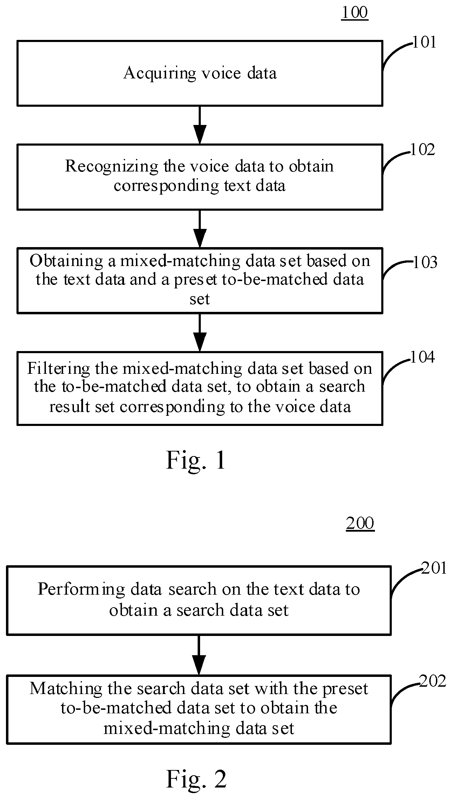

Fig. 1 shows a flow 100 of an embodiment of a method for searching a voice according to the present disclosure. The method for searching a voice includes the following steps:

Step 101, acquiring voice data.

In the present embodiment, an executing body on which the method for searching a voice runs may acquire the voice data in real time. The voice data may be sent by a user through a user terminal, or obtained by the user searching for information using a voice password. The voice data includes a search keyword. Using the voice data, a search result set related to the search keyword may be found. The search result set includes at least one search result, and each search result is a kind of search data related to the voice data. For example, when the user searches for a contact on the terminal, the search keyword in the voice data may include information of at least one contact, and the information includes name, phone number, and so on.

In the present embodiment, the executing body on which the method for searching a voice runs may acquire a contact reading permission of the user from the user terminal in advance, read contact information from the terminal's address book, and store the contact information in a preset database. Further, in order to enrich the contact information, it is also possible to create an address book contact pinyin library in advance, and all pinyin related to contacts in the contact information are stored in the pinyin library.

Step 102, recognizing the voice data to obtain corresponding text data.

In the present embodiment, after performing voice recognition on the voice data, the executing body on which the method for searching a voice runs may convert the voice data to text data, to obtain the text data corresponding to the voice data.

Step 103, obtaining a mixed-matching data set based on the text data and a preset to-be-matched data set.

In the present embodiment, the to-be-matched data set is preset determined data, and the executing body may determine a search intention of the user by matching the data in the to-be-matched data set with the text data.

In the present embodiment, the mixed-matching data set includes at least one type of mixed-matching data, and the mixed-matching data is data that matches to-be-determined text or intermediate data (data in different forms obtained from the to-be-determined text through data conversion). For example, the mixed-matching data includes: pinyin, text, characters, symbols, etc., and each mixed-matching data is matched with the to-be-determined text. For example, the pinyin is pinyin having the same pronunciation as the text data, and the conversion of text data to pinyin data may be completed through a pinyin tool library.

The content of the to-be-matched data set may be different according to different scenarios in which the method for searching a voice runs. For example, for a scenario where the user searches for contact information in the terminal, the to-be-matched data set is all the contact information prestored in the database.

When the text data in text form is obtained, to-be-matched data in the to-be-matched data set may be matched with the text data. If the to-be-matched data in the to-be-matched data set is the same as the text data or a similarity is greater than a similarity threshold (for example, 90%), it is determined that the to-be-matched data set matches the text data, and the text data or a plurality of data in the to-be-matched data set are aggregated together as the mixed-matching data set.

Alternatively, the obtaining a mixed-matching data set based on the text data and a preset to-be-matched data set includes: performing data enhancement on the text data to obtain at least one enhanced text data corresponding to the text data; matching each enhanced text data in the at least one enhanced text data with the to-be-matched data in the to-be-matched data set, and adding a successfully matched enhanced text data to the mixed-matching data set. In this alternative implementation, the performing data enhancement on the text data may be to acquire text data having the same pronunciation as the search text data, and add the acquired text data to the text data, thereby increasing the volume of the text data.

Step 104, filtering the mixed-matching data set based on the to-be-matched data set, to obtain a search result set corresponding to the voice data.

In the present embodiment, the search result set may include at least one search result, and each search result corresponds to the voice data. Each search result may be a search result corresponding to the voice data obtained by filtering after matching the to-be-matched data set with the mixed-matching data set. When the search result set is displayed to the user, the user may perform different operations according to the displayed search result. For example, when the voice data includes searching for a contact, and the search result includes: at least one contact information corresponding to the user's voice. The contact information includes contact text, contact pinyin, etc. After obtaining the contact information, the user may send the information to the contact.

Alternatively, after the search result set is obtained, the search results in the search result set may also be sorted. Each to-be-matched data in the to-be-matched data set has its own serial number, and each mixed-matching data in the mixed-matching data set may correspond to each to-be-matched data in the to-be-matched data set. First, data corresponding to each to-be-matched data may be filtered from the mixed-matching data set, then based on the serial number of each to-be-matched data, the mixed-matching data in the mixed-matching data set may be sorted to quickly determine the search results corresponding to the voice data.

The method for searching a voice provided by the embodiments of the present disclosure, first acquiring voice data; then recognizing the voice data to obtain corresponding text data; next obtaining a mixed-matching data set based on the text data and a preset to-be-matched data set; and finally filtering the mixed-matching data set based on the to-be-matched data set, to obtain a search result set corresponding to the voice data. Therefore, based on the text data and the preset to-be-matched data set, the mixed-matching data set is obtained, which comprehensively expands the mixed-matching data that matches the text data, and further more reasonably filters the mixed-matching data that is compatible with the to-be-matched data set, so that the obtained voice data search result is more accurate, and the user's voice search experience is improved.

Fig. 2 shows a flow 200 of a method for obtaining a mixed-matching data set according to the present disclosure. The method for obtaining a mixed-matching data set includes the following steps:

Step 201, performing data search on the text data to obtain a search data set.

In the present embodiment, performing data search on the text data is a process of data expansion for the to-be-determined text. For example, search pinyin data of the text data is obtained by searching, and the found search pinyin data is converted to text data to obtain search text data of different words but same pronunciation having the same pronunciation as the be-determined text. In the present embodiment, the conversion of pinyin data to text data may be performed by using a text conversion tool, and the text conversion tool is a commonly used tool, detailed description thereof will be omitted.

In the present embodiment, the search data set includes at least one search data, and each search data is data related to the text data. An expression form of the search data may be diverse, for example, the search data is search pinyin data or search text data.

In some alternative implementations of the present embodiment, the performing data search on the text data to obtain a search data set includes: acquiring to-be-determined pinyin data of the text data; searching for text data having the same pronunciation as the to-be-determined pinyin data to obtain search text data; and combining the text data and the search text data to obtain the search data set.

In this alternative implementation, each Chinese text has its corresponding pinyin. Converting the text data to pinyin data, and then searching for text data having the same pronunciation as the pinyin data, a plurality of search text data that are completely different from the text data may be obtained, and the plurality of search text data may be combined to obtain the search data set.

In this alternative implementation, by searching for the text data that has the same pronunciation as the search text data, and adding the data to the search data set, it enriches the search data set and provides a reliable basis for effectively matching the text data.

Step 202, matching the search data set with the preset to-be-matched data set to obtain the mixed-matching data set.

In this alternative implementation, each search data in the search data set may be compared with each to-be-matched data in the to-be-matched data set. If the two are exactly the same, current identical search data may be added to the mixed-matching data set as one mixed-matching data in the mixed-matching data set.

Alternatively, similarity calculation may be performed between each search data in the search data set and each to-be-matched data in the to-be-matched data. When a similarity between the two is greater than a similarity threshold, search data having the similarity greater than the similarity threshold is added to the mixed-matching data set, as one mixed-matching data in the mixed-matching data set.

The method for obtaining a mixed-matching data set provided by this alternative implementation, searches for the text data to obtain the search data set, which expands the data volume of the text data. Data compensation may be performed on text data with defective pronunciation in the user's voice in advance, which provides a reliable basis for obtaining comprehensive search results of the user's voice.

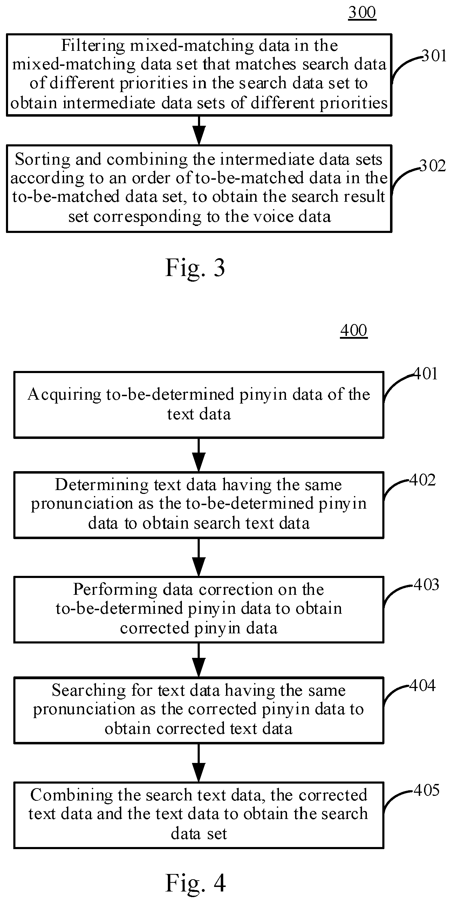

Fig. 3 shows a flow 300 of a method for obtaining a search result set corresponding to voice data according to the present disclosure. The method for obtaining a search result set corresponding to voice data includes the following steps:

Step 301, filtering mixed-matching data in the mixed-matching data set that matches search data of different priorities in the search data set to obtain intermediate data sets of different priorities.

In this alternative implementation, when there are different types of search data in the search data set, in order to present a better search data set to the user, the different types of search data in the search data set may be assigned different priorities in advance, and each type of search data corresponds to a priority level. For example, the search data set includes search pinyin data and search text data. The priority of the search text data is set to level one, the priority of the search pinyin data is set to level two, and the priority of the search pinyin data is lower than the priority of the search text data.

Further, when the different types of search data in the search data set are matched with the mixed-matching data in the mixed-matching data set, according to the type of the search data, the mixed-matching data obtained by matching is divided according to the priority corresponding to the search data, to obtain the intermediate data sets of different priorities, and each type of intermediate data set corresponds to a type of search data. For example, the priority level of the intermediate data set corresponding to the search text data is level one, and the priority level of the intermediate data set corresponding to the search pinyin data is level two.

In some alternative implementations of the present embodiment, the search data set includes: the text data and search text data of a priority lower than the text data, and the filtering mixed-matching data in the mixed-matching data set that matches search data of different priorities in the search data set to obtain intermediate data sets of different priorities, includes: matching the text data with the mixed-matching data set to obtain a to-be-determined intermediate data set that matches the text data; and removing the to-be-determined intermediate data set in the mixed-matching data set to obtain a search intermediate data set that matches the search text data, a priority of the search intermediate data set being lower than the to-be-determined intermediate data set.

In this alternative implementation, when the search data set includes two different priority data: the text data and the search text data, filtering the mixed-matching data in the mixed-matching data set based on the text data and the search text data, ensures the comprehensiveness of the two intermediate data sets of different priorities, displays to the user the two intermediate data sets of different priorities, and improves the user experience.

In some alternative implementations of the present embodiment, the search data set includes: the text data, the search text data, and the corrected text data with descending priority levels, and the filtering mixed-matching data in the mixed-matching data set that matches search data of different priorities in the search data set to obtain intermediate data sets of different priorities, includes: matching the text data with the mixed-matching data set to obtain a to-be-determined intermediate data set that matches the text data; removing to-be-determined intermediate data in the mixed-matching data set to obtain a stage subset; matching the search text data with the stage subset to obtain a search intermediate data set that matches the search text data; and removing the search intermediate data set in the stage subset to obtain a corrected intermediate data set that matches the corrected text data, a priority order of the to-be-determined intermediate data set, the search intermediate data set, and the corrected intermediate data set decreasing in sequence.

In this alternative implementation, when the search data set includes three different priority data: the text data, the search text data, and the corrected text data, filtering the mixed-matching data in the mixed-matching data set based on the text data, the search text data, and the corrected text data, ensures the comprehensiveness of the three intermediate data sets of different priorities, displays to the user the intermediate data sets of a variety of priorities, and improves the user experience.

Step 302, sorting and combining the intermediate data sets according to an order of to-be-matched data in the to-be-matched data set, to obtain the search result set corresponding to the voice data.

In the present embodiment, all the intermediate data sets may be sorted based on the to-be-matched data in the to-be-matched data set or a priority order of the intermediate data sets, and all the sorted intermediate data sets are combined together to obtain the search result set that may be displayed to the user.

Alternatively, the intermediate data set has data that is the same or corresponding to the to-be-matched data (for example, the pronunciation is the same as the to-be-matched data), so sorting the intermediate data sets may be to sort the data in each intermediate data set.

In some alternative implementations of the present embodiment, the sorting and combining the intermediate data sets according to an order of to-be-matched data in the to-be-matched data set, to obtain the search result set corresponding to the voice data, includes: sorting each intermediate data in the intermediate data sets according to a pinyin alphabetical order to obtain different sorted data sets; sorting, for each sorted data set, in response to determining that the sorted data set has a plurality of sorted data with same pinyin, the plurality of sorted data according to the order of the to-be-matched data corresponding to the sorted data in the to-be-matched data set; and sorting and combining all the sorted data sets according to priority levels of the intermediate data sets, to obtain the search result set corresponding to the voice data.

In this alternative implementation, first each intermediate data in the intermediate data sets is sorted according to the pinyin alphabetical order, then the sorted sorted data are sorted according to the order of the to-be-matched data corresponding to the sorted data in the to-be-matched data set, presenting a search result with reasonable pinyin and text to the user, which is convenient for the user to make accurate choices.

The present embodiment optimizes a contact sorting method according to three different priority levels. The specific sorting is: 1) a degree of complete Chinese matching; 2) a degree of complete pinyin matching; and 3) a degree of error correction. Here, the degree of Chinese matching is the highest priority. If there is a complete matching result in Chinese (without numbers) in the search keyword, it is displayed first, followed by the degree of complete pinyin matching (without numbers). If the pinyin and the Chinese are both incomplete, then sorting is performed based on a similarity between the search pinyin and a result pinyin.

The method for obtaining a search result set corresponding to voice data provided by this alternative implementation, filtering the mixed-matching data in the mixed-matching data set that matches the search data in the search data set, so as to facilitate the hierarchical display of the data have different matching effects in the mixed-matching data set with the to-be-matched data set. Further, the intermediate data sets are sorted according to the order of the to-be-matched data in the to-be-matched data set, ensuring the effective sorting of the matched search results and improving the user's voice search experience.

Fig. 4 shows a flow 400 of an embodiment of a method for obtaining a search data set according to the present disclosure. The method for obtaining a search data set includes the following steps:

Step 401, acquiring to-be-determined pinyin data of the text data.

In this alternative implementation, the text data is converted to pinyin data to obtain the to-be-determined pinyin data, and a traditional pinyin conversion tool may be used to convert the text data to the pinyin data. For the pinyin conversion tool in the present embodiment, detailed description thereof will be omitted.

Step 402, determining text data having the same pronunciation as the to-be-determined pinyin data to obtain the search text data.

In this alternative implementation, the to-be-determined pinyin data is a pinyin form of the text data. Through the to-be-determined pinyin data, all text data having the same pronunciation as the text data may be determined, and the text data having the same pronunciation as the text data is the search text data.

Step 403, performing data correction on the to-be-determined pinyin data to obtain corrected pinyin data.

In this alternative implementation, performing data correction on the to-be-determined pinyin data includes: replacing an initial in the to-be-determined pinyin data with another initial, for example, replacing "l" in the to-be-determined pinyin data with "r", or replacing "r" in the to-be-determined pinyin data with "I". Performing data correction on the to-be-determined pinyin data may also include: replacing a vowel in the to-be-determined pinyin data with another vowel, for example, replacing "ing" in the to-be-determined pinyin data with "in".

Step 404, searching for text data having the same pronunciation as the corrected pinyin data to obtain corrected text data.

In this alternative implementation, after the corrected pinyin data is obtained, the text data that has the same pronunciation as the corrected pinyin data is determined, and the obtained text data is the corrected text data.

In this alternative implementation, the corrected text data is text data completely different from the search text data. For example, a search text data is "Zhang San" and its pronunciation is zhangsan; and its corresponding corrected text may be "Zang San" and its pronunciation is zangsan.

Step 405, combining the search text data, the corrected text data and the text data to obtain the search data set.

In the present embodiment, combining the search text data, the corrected text data and the text data refers to fusing the three together into the search data set. The search data set includes at least one search data. Each search data may be the search text data, or the corrected text data, or the text data.

In this alternative implementation, first, the search text is obtained based on the to-be-determined pinyin data of the text data, which ensures the search data of different words but same pronunciation as the text data; further, data correction is performed on the to-be-determined pinyin data to obtain the corrected pinyin data, and the corrected text data is obtained from the corrected pinyin data, thereby ensuring that text data of persons with defective pronunciation are effectively supplemented, and the comprehensiveness and reliability of the search data set is ensured.

As an example, for a scenario where the user searches for contact information, the to-be-matched data set is a data set of pre-stored contact information, and the method for searching a voice of the present disclosure includes the following steps:

First, after obtaining a contact reading permission of the user from the user terminal, reading the contact information from the terminal's address book.

Secondly, using the voice data, determining a target contact P1 input by the user, recognizing and converting the voice data to text data, and obtaining a mixed-matching data set based on the text data and the to-be-matched data set. In the present embodiment, obtaining a mixed-matching data set is: recognizing the text data (such as Zhang San) as to-be-determined pinyin data (zhangsan) through a pinyin tool library, determining search text data that has exactly the same pronunciation as the to-be-determined pinyin data, then, according to a preset correction pinyin table (shown in Table 1), correcting the to-be-determined pinyin data to obtain corrected pinyin data, such as zhanshan zhansan, zhangshan, zhangshang; converting the corrected pinyin data to corrected text data, and combining the text data, and the corrected text data to obtain the mixed-matching data set.

**Table 1**

| pinyin | corrected pinyin | example |
|---|---|---|
| l | r | lejin-rejin |
| r | 1 | huarongdao-hual ongdao |
| ch | c | liuche-liuce |
| c | ch | caocao-chaochao |
| sh | s | xiahoushang-xiahousang |
| s | sh | simayi-shimayi |
| z | zh | xiayize-xiayizhe |
| zh | z | zhangsan-zangsan |
| h | f | hushi-fushi |
| f | h | dufu-duhu |
| in | ing | xinqiji-xingqiji |
| ing | in | yingzheng-yinzheng |

Thirdly, filtering numbers in the mixed-matching data set, and filtering out a to-be-determined intermediate data set R1 that exactly matches the Chinese of the target contact P1 from a mixed-matching data set M after filtering the numbers.

Fourth, removing a to-be-determined intermediate data P1 in the mixed-matching data set M to obtain a stage subset J1.

Fifth, in the stage subset J1, filtering out a data set that exactly matches the pronunciation of the target contact PI, that is, a data set that exactly matches the search text data. There may be polyphonic words in the data set, at the same time, the Chinese corresponding to pinyin may also be different. Therefore, it needs to perform sorting again in the data set, and the rules are as follows:
(1) In the data set, a first round of sorting is performed according to the Chinese pinyin, for example, "Call Zhang Le", and two results of zhangle\zhangyue may be obtained, then the first round is to sort the pinyin according to the pinyin alphabetical order to obtain a text data set.
(2) In the results of the first round of sorting, a result group with the same pinyin (such as Zhang San (first tone), Zhang San(second tone), Zhang San(third tone)) are sorted in a second round according to the order of the to-be-matched data in the to-be-matched data set, to obtain a final search intermediate data set R2. For example, for zhangle\zhangyue, if there are contacts named Zhang Le, Zhang Le(or yue), Zhang Yue in the address book, then the search intermediate data set R2 may be: Zhang Le (or yue), Zhang Le, Zhang Yue.

Sixth, removing the search intermediate data set R2 in the stage subset J1 to obtain a data set that exactly matches the corrected text data, re-sorting the data set that exactly matches the corrected text data in the same way as above for searching the intermediate data set R2 to obtain a corrected intermediate data set R3. Taking the above voice data as zhangsan, if there is a contact named Zhang Shan in the address book, Zhang Shan may appear in the corrected intermediate data set R3, because her pinyin is not the correct pinyin of the voice input (the correct pinyin is zhangsan).

Seventh, sorting according to the order of the to-be-determined intermediate data set R1, the search intermediate data set R2, and the corrected intermediate data set R3, and displaying the sorted to-be-determined intermediate data set R1, the search intermediate data set R2, and the corrected intermediate data set R3 to the user.

The present embodiment optimizes a contact sorting method according to three different priority levels. The specific sorting is: 1) a degree of complete Chinese matching; 2) a degree of complete pinyin matching; and 3) a degree of error correction. Here, the degree of Chinese matching is the highest priority. If there is a complete matching result in Chinese (without numbers) in the search keyword, it is displayed first, followed by the degree of complete pinyin matching (without numbers). If the pinyin and the Chinese are both incomplete, then sorting is performed based on a similarity between the search pinyin and a result pinyin.

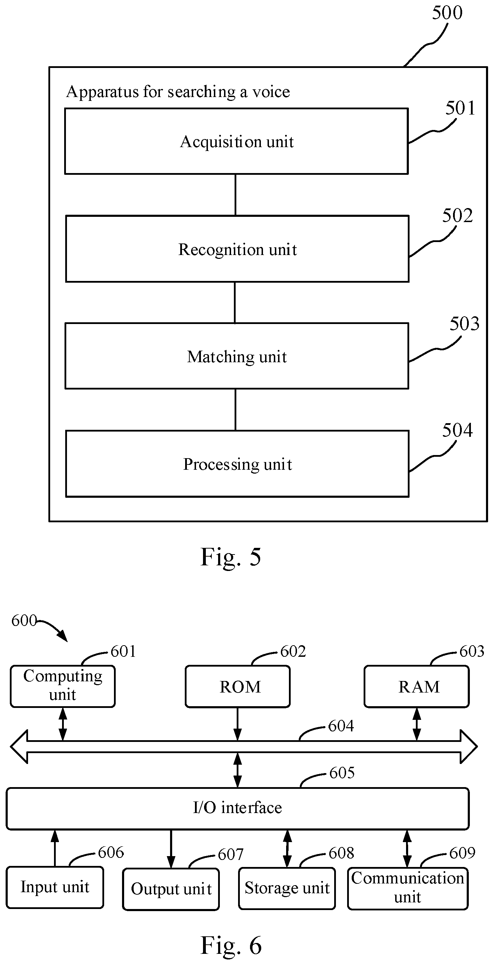

With further reference to Fig. 5, as an implementation of the method shown in the above figures, the present disclosure provides an embodiment of an apparatus for searching a voice. The apparatus embodiment corresponds to the method embodiment as shown in Fig. 1. The apparatus may be applied to various electronic devices.

As shown in Fig. 5, an apparatus 500 for searching a voice provided by the present embodiment includes: an acquisition unit 501, a recognition unit 502, a matching unit 503 and a processing unit 504. The acquisition unit 501 may be configured to acquire voice data. The recognition unit 502 may be configured to recognize the voice data to obtain corresponding text data. The matching unit 503 may be configured to obtain a mixed-matching data set based on the text data and a preset to-be-matched data set. The processing unit 504 may be configured to filter the mixed-matching data set based on the to-be-matched data set, to obtain a search result set corresponding to the voice data.

In the present embodiment, in the apparatus 500 for searching a voice: for the specific processing and the technical effects of the acquisition unit 501, the recognition unit 502, the matching unit 503 and the processing unit 504, reference may be made to the relevant descriptions of step 101, step 102, step 103, step 104 in the embodiment corresponding to Fig. 1 respectively, and detailed description thereof will be omitted.

In some alternative implementations of the present embodiment, the matching unit 503 includes: a search module (not shown in the figure), a matching module (not shown in the figure). The search module may be configured to perform data search on the text data to obtain a search data set. The matching module may be configured to match the search data set with the preset to-be-matched data set to obtain the mixed-matching data set.

In some alternative implementations of the present embodiment, the search module includes: a first acquisition submodule (not shown in the figure), a first search submodule (not shown in the figure), and a first combination submodule (not shown in the figure). The first acquisition submodule may be configured to acquire to-be-determined pinyin data of the text data. The first search submodule may be configured to search for text data having the same pronunciation as the to-be-determined pinyin data to obtain search text data. The first combination submodule may be configured to combine the text data and the search text data to obtain the search data set.

In some alternative implementations of the present embodiment, the search module includes: a second acquisition submodule (not shown in the figure), a determination submodule (not shown in the figure), a correction submodule (not shown in the figure), a second search submodule (not shown in the figure), a second combination submodule (not shown in the figure). The second acquisition submodule may be configured to acquire to-be-determined pinyin data of the text data. The determination submodule may be configured to determine search text data having the same pronunciation as the to-be-determined pinyin data to obtain the search text data. The correction submodule may be configured to perform data correction on the to-be-determined pinyin data to obtain corrected pinyin data. The second search submodule may be configured to search for text data having the same pronunciation as the corrected pinyin data to obtain corrected text data. The second combination submodule may be configured to combine the text data, the corrected text data and the search text data to obtain the search data set.

In some alternative implementations of the present embodiment, the processing unit 504 includes: a filtering module (not shown in the figure), a sorting module (not shown in the figure). The filtering module may be configured to filter mixed-matching data in the mixed-matching data set that matches search data of different priorities in the search data set to obtain intermediate data sets of different priorities. The sorting module may be configured to sort and combine the intermediate data sets according to an order of to-be-matched data in the to-be-matched data set, to obtain the search result set corresponding to the voice data.

In some alternative implementations of the present embodiment, the sorting module includes: a first sorting submodule (not shown in the figure), a second sorting submodule (not shown in the figure), an obtaining submodule (not shown in the figure). The first sorting submodule may be configured to sort each intermediate data in the intermediate data sets according to a pinyin alphabetical order to obtain different sorted data sets. The second sorting submodule may be configured to sort, for each sorted data set, in response to determining that the sorted data set has a plurality of sorted data with same pinyin, the plurality of sorted data according to the order of the to-be-matched data corresponding to the sorted data in the to-be-matched data set. The obtaining submodule may be configured to sort and combine all the sorted data sets according to priority levels of the intermediate data sets, to obtain the search result set corresponding to the voice data.

In some alternative implementations of the present embodiment, the search data set includes: the text data and search text data of a priority lower than the text data, and the filtering module includes: a first to-be-determined submodule (not shown in the figure), a first removal submodule (not shown in the figure). The first to-be-determined submodule may be configured to match the text data with the mixed-matching data set to obtain a to-be-determined intermediate data set that matches the text data. The first removal submodule may be configured to remove the to-be-determined intermediate data set in the mixed-matching data set to obtain a search intermediate data set that matches the search text data, a priority of the search intermediate data set being lower than the to-be-determined intermediate data set.

In some alternative implementations of the present embodiment, the search data set includes: the text data, the search text data and the corrected text data with descending priority levels. The filtering module includes: a second to-be-determined submodule (not shown in the figure), a second removal submodule (not shown in the figure), a first matching submodule (not shown in the figure), a third removal submodule (not shown in the figure). The second to-be-determined submodule may be configured to match the text data with the mixed-matching data set to obtain a to-be-determined intermediate data set that matches the text data. The second removal submodule may be configured to remove to-be-determined intermediate data in the mixed-matching data set to obtain a stage subset. The first matching submodule may be configured to match the search text data with the stage subset to obtain a search intermediate data set that matches the search text data. The third removal submodule may be configured to remove the search intermediate data set in the stage subset to obtain a corrected intermediate data set that matches the corrected text data, a priority order of the to-be-determined intermediate data set, the search intermediate data set, and the corrected intermediate data set decreasing in sequence.

The apparatus for searching a voice provided by the embodiment of the present disclosure, first the acquisition unit 501 acquires voice data; then the recognition unit 502 recognizes the voice data to obtain corresponding text data; next the matching unit 503 obtains a mixed-matching data set based on the text data and a preset to-be-matched data set; and finally the processing unit 504 filters the mixed-matching data set based on the to-be-matched data set, to obtain a search result set corresponding to the voice data. Therefore, based on the text data and the preset to-be-matched data set, the mixed-matching data set is obtained, which comprehensively expands the mixed-matching data that matches the text data, and further more reasonably filters the mixed-matching data that is compatible with the to-be-matched data set, so that the obtained voice data search result is more accurate, and the user's voice search experience is improved.

According to an embodiment of the present disclosure, the present disclosure also provides an electronic device, a readable storage medium, and a computer program product.

Fig. 6 shows a schematic block diagram of an example electronic device 600 that can be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit the implementations of the present disclosure as described and/or claimed herein.

As shown in Fig. 6, the device 600 includes a computation unit 601, which may execute various appropriate actions and processes in accordance with a computer program stored in a read-only memory (ROM) 602 or a computer program loaded into a random access memory (RAM) 603 from a storage unit 608. The RAM 603 also stores various programs and data required by operations of the device 600. The computation unit 601, the ROM 602 and the RAM 603 are connected to each other through a bus 604. An input/output (I/O) interface 605 is also connected to the bus 604.

The following components in the device 600 are connected to the I/O interface 605: an input unit 606, for example, a keyboard and a mouse; an output unit 607, for example, various types of displays and a speaker; a storage device 608, for example, a magnetic disk and an optical disk; and a communication unit 609, for example, a network card, a modem, a wireless communication transceiver. The communication unit 609 allows the device 600 to exchange information/data with an other device through a computer network such as the Internet and/or various telecommunication networks.

The computation unit 601 may be various general-purpose and/or special-purpose processing assemblies having processing and computing capabilities. Some examples of the computation unit 601 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 601 performs the various methods and processes described above, for example, the method for searching a voice. For example, in some embodiments, the method for searching a voice may be implemented as a computer software program, which is tangibly included in a machine readable medium, for example, the storage device 608. In some embodiments, part or all of the computer program may be loaded into and/or installed on the device 600 via the ROM 602 and/or the communication unit 609. When the computer program is loaded into the RAM 603 and executed by the computation unit 601, one or more steps of the above method for searching a voice may be performed. Alternatively, in other embodiments, the computation unit 601 may be configured to perform the method for searching a voice through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable voice searching apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other.

In the technical solution of the present disclosure, the acquisition, storage, and application of user personal information involved are in compliance with relevant laws and regulations, and does not violate public order and good customs.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for searching a voice, the method comprising:
acquiring (101) voice data;
recognizing (102) the voice data to obtain corresponding text data;
obtaining (103) a mixed-matching data set based on the text data and a preset to-be-matched data set; and
filtering (104) the mixed-matching data set based on the to-be-matched data set, to obtain a search result set corresponding to the voice data.

2. The method according to claim 1, wherein the obtaining (103) a mixed-matching data set based on the text data and a preset to-be-matched data set, comprises:
performing (201) data search on the text data to obtain a search data set; and
matching (202) the search data set with the preset to-be-matched data set to obtain the mixed-matching data set.

3. The method according to claim 2, wherein the performing (201) data search on the text data to obtain a search data set, comprises:
acquiring (401) to-be-determined pinyin data of the text data;
searching (404) for text data having a same pronunciation as the to-be-determined pinyin data to obtain search text data; and
combining the text data and the search text data to obtain the search data set.

4. The method according to claim 2, wherein the performing (201) data search on the text data to obtain a search data set, comprises:
acquiring (401) to-be-determined pinyin data of the text data;
determining (402) text data having a same pronunciation as the to-be-determined pinyin data to obtain search text data;
performing (403) data correction on the to-be-determined pinyin data to obtain corrected pinyin data;
searching (404) for text data having a same pronunciation as the corrected pinyin data to obtain corrected text data; and
combining (405) the text data, the corrected text data and the search text data to obtain the search data set.

5. The method according to any one of claims 2-4, wherein the filtering (104) the mixed-matching data set based on the to-be-matched data set, to obtain a search result set corresponding to the voice data, comprises:
filtering mixed-matching data in the mixed-matching data set that matches search data of different priorities in the search data set to obtain intermediate data sets of different priorities; and
sorting and combining the intermediate data sets according to an order of to-be-matched data in the to-be-matched data set, to obtain the search result set corresponding to the voice data.

6. The method according to claim 5, wherein the sorting and combining the intermediate data sets according to an order of to-be-matched data in the to-be-matched data set, to obtain the search result set corresponding to the voice data, comprises:
sorting each intermediate data in the intermediate data sets according to a pinyin alphabetical order to obtain different sorted data sets;
sorting, for each sorted data set, in response to determining that the sorted data set has a plurality of sorted data with same pinyin, the plurality of sorted data according to the order of the to-be-matched data corresponding to the sorted data in the to-be-matched data set; and
sorting and combining all the sorted data sets according to priority levels of the intermediate data sets, to obtain the search result set corresponding to the voice data.

7. The method according to claim 5, wherein the search data set comprises: the text data and search text data of a priority lower than the text data, and the filtering mixed-matching data in the mixed-matching data set that matches search data of different priorities in the search data set to obtain intermediate data sets of different priorities, comprises:
matching the text data with the mixed-matching data set to obtain a to-be-determined intermediate data set that matches the text data; and
removing the to-be-determined intermediate data set in the mixed-matching data set to obtain a search intermediate data set that matches the search text data, a priority of the search intermediate data set being lower than the to-be-determined intermediate data set.

8. The method according to claim 5, wherein the search data set comprises: the text data, the search text data, and the corrected text data with descending priority levels, and the filtering mixed-matching data in the mixed-matching data set that matches search data of different priorities in the search data set to obtain intermediate data sets of different priorities, comprises:
matching the text data with the mixed-matching data set to obtain a to-be-determined intermediate data set that matches the text data;
removing to-be-determined intermediate data in the mixed-matching data set to obtain a stage subset;
matching the search text data with the stage subset to obtain a search intermediate data set that matches the search text data; and
removing the search intermediate data set in the stage subset to obtain a corrected intermediate data set that matches the corrected text data, a priority order of the to-be-determined intermediate data set, the search intermediate data set, and the corrected intermediate data set decreasing in sequence.

9. An apparatus for searching a voice, the apparatus comprising:
an acquisition unit (501), configured to acquire voice data;
a recognition unit (502), configured to recognize the voice data to obtain corresponding text data;
a matching unit (503), configured to obtain a mixed-matching data set based on the text data and a preset to-be-matched data set; and
a processing unit (504), configured to filter the mixed-matching data set based on the to-be-matched data set, to obtain a search result set corresponding to the voice data.

10. The apparatus according to claim 9, wherein the matching unit (503) comprises:
a search module, configured to perform data search on the text data to obtain a search data set; and
a matching module, configured to match the search data set with the preset to-be-matched data set to obtain the mixed-matching data set.

11. An electronic device, comprising:
at least one processor; and
a memory, communicatively connected to the at least one processor; wherein,
the memory, storing instructions executable by the at least one processor, the instructions, when executed by the at least one processor, cause the at least one processor to perform the method according to any one of claims 1-8.

12. A non-transitory computer readable storage medium, storing computer instructions, the computer instructions, being used to cause a computer to perform the method according to any one of claims 1-8.

13. A computer program product, comprising a computer program, the computer program, when executed by a processor, implements the method according to any one of claims 1-8.
